# EUROPEAN PATENT APPLICATION

(11) **EP 1 434 332 A2**
(43) Date of publication of application: **30.06.2004**
(21) Application number: 03257937.7
(22) Date of filing: 16.12.2003
(51) Int. Cl.: H02K 7/102

(54) **Motor with brake**

(30) Priority: 24.12.2002 CN 02157255
(71) Applicant: Positec Power Tools (Suzhou) Co., Ltd., Suzhou 215006 (CN)
(72) Inventor: Zou, Kening, Suzhou 215006 (CN); Kong, Zhao, Suzhou 215021 (CN)
(74) Representative: Stuttard, Garry Philip

(57) **Abstract**

The present invention relates to a motor with a braking arrangement comprising a stator, a rotor, a shaft fixed to the rotor and a short-circuit ring fixed to an end of the rotor. A brake body rings the shaft and the brake body is provided with first projections projecting towards the short-circuit ring. Each of the first projections comprise at least one beveled surface. The short-circuit ring is provided with second projections, each comprising at least one wedge surface. A magnetic conducting ring separately disposed with respect to the brake body is disposed between the rotor and the brake body. The brake body is discrete from the magnetic conducting ring and therefore can be manufactured independently whilst the projections are exposed on its exterior to simplify manufacture.

## Description

The present invention relates to a motor capable of braking automatically after power turn-off.

EP-A-360779 discloses an arrangement for braking an electric motor with a squirrel-cage rotor comprising a substantially pot-shaped brake body formed by deep drawing whose free edge faces towards the short-circuit ring of the squirrel-cage rotor and at least one beveled surface on each projection projects towards the short-circuit ring. The projections formed on the short-circuit ring of the squirrel-cage rotor each have a wedged surface which is aligned relative to the axis of the squirrel-cage rotor in the same oblique position as the beveled surface on the brake body. A brake lining is arranged between the brake body and a component fixed relative to the housing of the electric motor and a spring biasing the brake body against the brake lining is arranged between the brake body and the squirrel-cage rotor. As the brake body is a pot-shaped structure, it is very difficult and therefore costly to manufacture the projections on its bottom portion.

The present invention seeks to provide an easily manufactured braking arrangement for an electric motor and in particular relates to a braking arrangement exploiting a brake body of elegantly simple structure.

Thus viewed from one aspect the present invention provides a motor comprising:
a stator;
a rotor;
a front end covering which is stable with respect to the stator;
a short-circuit ring fixed to an end of the rotor and provided with second projections, each of the second projections comprising at least one wedge surface;
a shaft fixed to the rotor and extending through the short-circuit ring;
a brake body ringing the shaft, wherein the underside of the brake body facing the short-circuit ring is provided with first projections projecting towards the short-circuit ring, wherein each of the first projections comprises at least one beveled surface;
a friction body between the brake body and the front end cover;
a spring between the rotor and the brake body with a tendency to bias the brake body against the
friction body,
characterized in that the electric motor further comprises:
a magnetic conducting ring between the rotor and the brake body which surrounds the short-circuit ring coaxially and is separate from the brake body.

The present invention relates to a motor with a braking arrangement comprising a stator, a rotor, a shaft fixed to the rotor and a short-circuit ring fixed to an end of the rotor. A brake body rings the shaft and the brake body is provided with first projections on the side towards the short-circuit ring. The first projections project towards the short-circuit ring. Each of the first projections comprise at least one beveled surface. The short-circuit ring is provided with second projections, each comprising at least one wedge surface. A friction body is provided between the brake body and a front end covering which is stable with respect to the stator. A spring is provided between the rotor and the brake body and biases the brake body against the friction body. A magnetic conducting ring separately disposed with respect to the brake body is disposed between the rotor and the brake body.

In accordance with the invention, the brake body is discrete from the magnetic conducting ring and therefore can be manufactured independently whilst the projections are exposed on its exterior to simplify manufacture.

Preferably the underside of the brake body is provided with an axially extending cylindrical brake lining surrounding the shaft. By providing the brake lining on the brake body, the brake body is able to move advantageously in a stable manner.

Generally each wedge surface of the second projections is coincidental with a beveled surface of the first projections. In a preferred embodiment, the at least one beveled surface and the at least one wedge surface are (at least in part) upwardly coincidental in the direction of rotation.

In a preferred embodiment, each first projection is a wedge-shaped body. Particularly preferably the wedge-shaped body is disposed at or near to the perimeter of the underside of the brake body.

In a preferred embodiment, each first projection is a twin wedge-shaped body. The twin wedge-shaped body has twin beveled surfaces. Particularly preferably the twin wedge-shaped body is disposed at or near to the perimeter of the underside of the brake body.

In a preferred embodiment, the first projections are two or more wedge-shaped bodies (preferably two or more twin wedge-shaped bodies), particularly preferably three or more wedge-shaped bodies (preferably three or more twin wedge-shaped bodies), more preferably four or more wedge-shaped bodies (preferably four or more twin wedge-shaped bodies), especially preferably four wedge-shaped bodies (preferably four twin wedge-shaped bodies). Preferably the wedge-shaped (or twin wedge-shaped bodies) are polarised at or near to the perimeter of the underside of the brake body.

Typically the twin wedge-shaped body is a truncated rectangular pyramidal body. Preferably the twin wedge-shaped body is a truncated rectangular pyramidal shell *(ie* is a hollow body).

In a preferred embodiment, each second projection is a wedge-shaped projection. Particularly preferably the wedge-shaped projection is disposed at the upper end of the short-circuit ring.

In a preferred embodiment, each second projection is a twin wedge-shaped projection. The twin wedge-shaped projection has twin wedges. Particularly preferably the twin wedge-shaped projection is disposed at the upper end of the short-circuit ring.

In a preferred embodiment, the second projections are two or more wedge-shaped projections (preferably two or more twin wedge-shaped projections), particularly preferably three or more wedge-shaped projections (preferably three or more twin wedge-shaped projections), more preferably four or more wedge-shaped projections (preferably four or more twin wedge-shaped projections), especially preferably four wedge-shaped projections (preferably four twin wedge-shaped projections). Preferably the wedge-shaped (or twin wedge-shaped projections) are polarised at the upper end of the short-circuit ring.

Typically the twin wedge-shaped projection is a truncated rectangular pyramidal projection.

The brake body may be a substantially planar member of any convenient shaped with a substantially central aperture for ringing the shaft. Typically the brake body is a substantially circular planar member.

Viewed from a further aspect the present invention provides a brake body as hereinbefore defined.

Viewed from a yet further aspect the present invention provides a motor with braking device comprising a stator, a rotor, a shaft fixedly connected to said rotor, a short-circuit ring fixedly connect to a end portion of said rotor, a brake body ring around said shaft, said brake body is disposed with first projections on the side towards said short-circuit ring and said first projections projecting towards said short-circuit ring, each of said projection comprising at least one beveled surface, said short-circuit ring is provided with second projections, each of said second projections comprising at least one wedge surface; a friction body providing between said brake body and a front end covering which is stable with respect to said stator, a spring provided between said rotor and said brake body and which give said brake body a trend against said friction body, characterized in that: a magnet conducting ring, which separately disposed with respect to said brake body and which be disposed between said rotor and said brake body.

The present invention will now be described in a non-limitative sense with reference to the accompanying Figures in which:
FIG. 1 shows a mainly sectional view of the structure of an embodiment of the invention;
FIG. 2 shows a partly exploded view of the braking arrangement of the embodiment of the invention;
FIG. 3 shows a perspective view of a underside of the brake body of the embodiment of the invention;
FIG. 4 shows a perspective view of the upperside of the brake body of the embodiment of the invention;
FIG. 5 shows a perspective view of the rotor of the embodiment of the invention;
FIG. 6 shows a perspective view of the rotor of FIG. 5 with the magnetic conducting ring assembled;
FIG. 7 shows a perspective view of the rotor of FIG. 6 with the spring assembled; and
FIG. 8 shows a perspective view of the rotor of FIG. 7 with the brake body assembled.

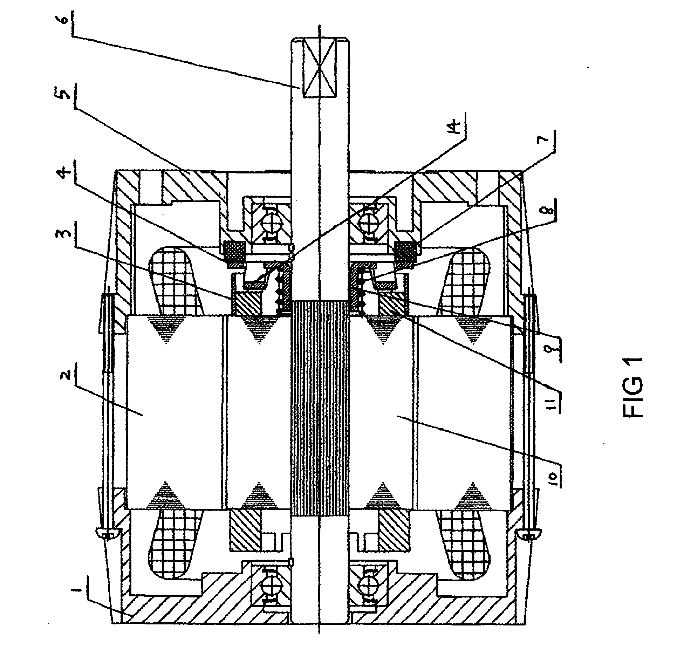

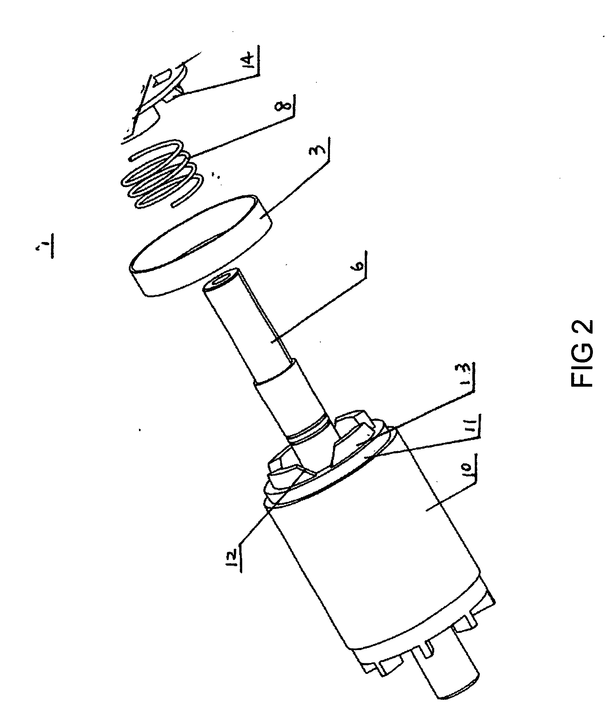

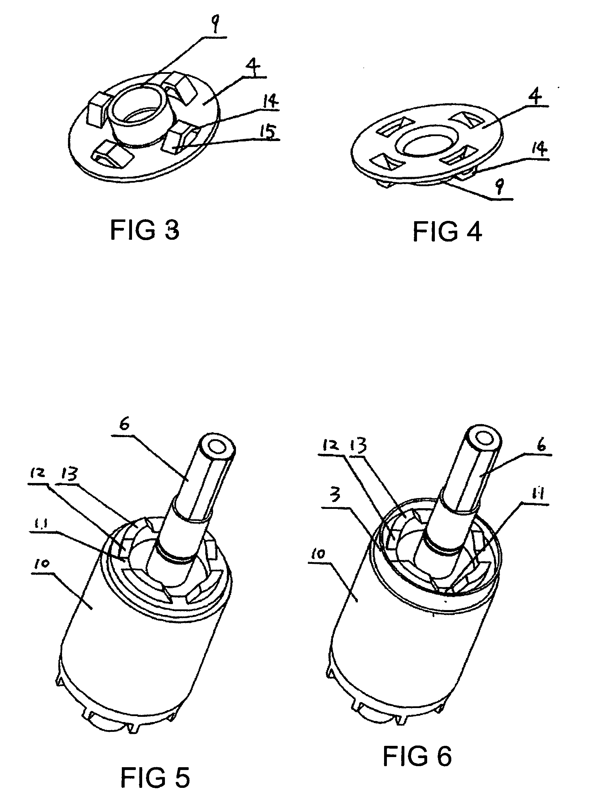

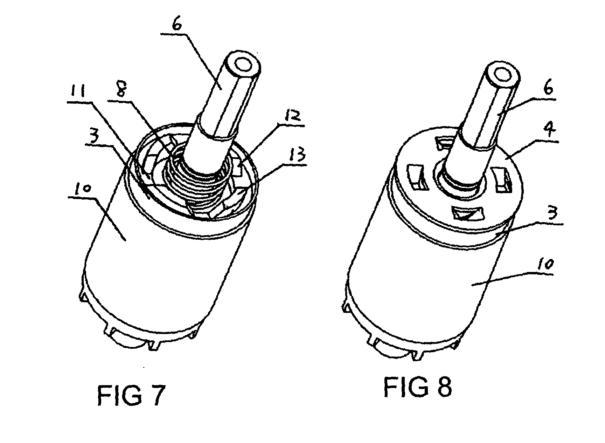

Figures 1 to 8 illustrate an embodiment of the electric motor of the invention with a rotor braking device comprising a stator 2, a rotor 10, a shaft 6 fixed to the rotor 10, a front end covering 5 and a rear end covering 1. A short-circuit ring 11 is fixed to an end of the rotor 10 and the shaft 6 extends through the short-circuit ring 11.

A brake body 4 in the form of a circular plate rings the shaft 6. The underside of the brake body 4 facing the short-circuit ring 11 is provided with four first projections 14 projecting towards the short-circuit ring 11. Each projection 14 comprises at least one beveled surface 15. The short-circuit ring 11 is provided with four second projections 13 each comprising at least one wedge surface 12.

A friction body 7 is provided between the upperside of the brake body 4 and a front end cover 5 which is stable with respect to the stator 2. A spring 8 between the rotor 10 and the underside of the brake body 4 biases the brake body 4 against the friction body 7. A magnetic conducting ring 3 is disposed between the rotor 10 and the brake body 4 surrounding the short-circuit ring 11 coaxially but is separate from the brake body 4.

The underside of the brake body 4 is provided with an axially extending cylindrical brake lining 9 mounted on the shaft 6. When the electric motor is on, a force is exerted on the brake body 4 by the magnetic conducting ring 3 which overcomes the elastic force exerted by the spring 8. In this state, the brake body 4 is spaced apart from the friction body 7 so that the rotor 10 is able to move freely. When the power to the electric motor is turned off, the brake body 4 is released and urged towards the friction body 7 by the spring 8 where its rotation is arrested and a braking force is exerted on the rotor 10. As the motor slows, the wedge surface 12 interacts with the beveled surface 15 causing the brake body 4 to move further into engagement with the friction body 7 to shorten the braking time.

## Claims

1. A motor comprising:
a stator [2];
a rotor [10];
a front end covering [5] which is stable with respect to the stator [2];
a short-circuit ring [11] fixed to an end of the rotor [10] and provided with second proj ections [13], each of the second projections [13] comprising at least one wedge surface [12];
a shaft [6] fixed to the rotor [10] and extending through the short-circuit ring [11];
a brake body [4] ringing the shaft [6], wherein the underside of the brake body [4] facing the short-circuit ring [11] is provided with first proj ections [14] proj ecting towards the short-circuit ring [11], wherein each of the first projections [14] comprises at least one beveled surface [15];
a friction body [7] between the brake body [4] and the front end cover [5];
a spring [8] between the rotor [10] and the brake body [4] with a tendency to bias the brake body [4] against the friction body [7],
**characterized in that** the electric motor further comprises:
a magnetic conducting ring [3] between the rotor [10] and the brake body [4] which surrounds the short-circuit ring [11] coaxially and is separate from the brake body [4].

2. An electric motor as claimed in claim 1, wherein the underside of the brake body [4] is provided with an axially extending cylindrical brake lining [9] surrounding the shaft [6].

3. An electric motor as claimed in claim 1 or 2 wherein the brake body [4] is a substantially planar member.

4. An electric motor as claimed in any preceding claim wherein the wedge surface [12] of the second projections [13] is coincidental with the beveled surface [15] of the first projections [14].

5. An electric motor as claimed in any preceding claim wherein the at least one beveled surface [15] and the at least one wedge surface [12] are at least in part upwardly coincidental in the direction of rotation.

6. An electric motor as claimed in any preceding claim wherein each first projection [14] is a wedge-shaped body.

7. An electric motor as claimed in claim 6 wherein the wedge-shaped body is disposed at or near to the perimeter of the underside of the brake body [4].

8. An electric motor as claimed in any preceding claim wherein each first projection [14] is a twin wedge-shaped body.

9. An electric motor as claimed in claim 8 wherein the twin wedge-shaped body is disposed at or near to the perimeter of the underside of the brake body [4].

10. An electric motor as claimed in any preceding claim wherein the first projections [14] are two or more wedge-shaped bodies

11. An electric motor as claimed in any preceding claim wherein the first projections [14] are four twin wedge-shaped bodies polarised at or near to the perimeter of the underside of the brake body.

12. An electric motor as claimed in any of claims 8 to 11 wherein the or each twin wedge-shaped body is a truncated rectangular pyramidal shell.

13. An electric motor as claimed in any preceding claim wherein each second projection [13] is a twin wedge-shaped projection.

14. An electric motor as claimed in any preceding claim wherein the second projections [13] are two or more wedge-shaped projections or two or more twin wedge-shaped projections

15. An electric motor as claimed in any preceding claim wherein the second projections [13] are four wedge-shaped projections or four twin wedge-shaped projections polarised at the upper end of the short-circuit ring [11].

16. A brake body as defined in any preceding claim.
